# EUROPÄISCHE PATENTSCHRIFT

(11) **EP 1 664 418 B1**
(45) Veröffentlichungstag und Bekanntmachung des Hinweises auf die Patenterteilung: **28.05.2008**
(21) Anmeldenummer: 04764992.6
(22) Anmeldetag: 09.09.2004
(51) Int. Cl.: D06M 15/263, C08F 222/02

(54) **VERWENDUNG FORMALDEHYDFREIER WÄSSRIGER BINDEMITTEL FÜR SUBSTRATE**
USE OF AN AQUEOUS BINDING AGENT DEVOID OF FORMALDEHYDE FOR SUBSTRATES
UTILISATION DE LIANTS AQUEUX SANS FORMALDEHYDE POUR DES SUBSTRATS

(30) Priorität: 15.09.2003 DE 10342858
(43) Veröffentlichungstag der Anmeldung: 07.06.2006
(73) Patentinhaber: BASF SE, 67056 Ludwigshafen (DE)
(72) Erfinder: MICHL, Kathrin, 67063 Ludwigshafen (DE); GERST, Matthias, 67433 Neustadt (DE)
(86) Internationale Anmeldenummer: PCT/EP2004/010056
(87) Internationale Veröffentlichungsnummer: WO 2005/026433

(56) Entgegenhaltungen:
- EP-A- 0 583 086
- EP-A- 0 591 821
- EP-A- 0 882 074
- WO-A-94/08085

## Beschreibung

Die vorliegende Erfindung betrifft die Verwendung formaldehydfreier, wässriger Bindemittel mit breiter Molekulargewichtsverteilung für Substrate, enthaltend Polymerisate, aufgebaut aus Monomeren A) und B), mit
(A) 5 bis 50 Gew.-% eines ethylenisch ungesättigten Säureanhydrids oder einer ethylenisch ungesättigten Dicarbonsäure, deren Carbonsäuregruppen eine Anhydridgruppe bilden können, oder Gemischen davon [(Monomere A)],
(B) 50 bis 95 Gew.-% einer ethylenisch ungesättigten Verbindung [(Monomere B)] sowie
(C) mindestens einen polyfunktionellen Vernetzer oder Gemische davon,
wobei die durch radikalische Polymerisation erhaltenen Polymerisate aus A) und B) bei Einordnung in ein Koordinatensystem über ihr mittleres Molekulargewicht Mw und ihre Polydispersitätswerte, in der Fläche oberhalb einer Gerade liegen, die über die Geradengleichung y= 1,25x + 20000 definiert ist und in y-Richtung parallel um mindestens + 3000 verschoben wurde, wobei die x-Achse das Gewichtsmittel des Molekulargewichtes und die y-Achse die Polydispersität mal 10000 bezeichnet.

Des weiteren betrifft die Erfindung die Bindemittel selbst, sowie deren Verwendung für z.B. Formkörper, Matten oder Platten, insbesondere für faserige und körnige Substrate wie Faservliese, Glasfasern, Steinwolle, Reißbaumwolle, Naturfasern oder Kunstfasern.

Die Verfestigung von flächenförmigen Fasergebilden, sog. Faservliesen, erfolgt zum Beispiel rein mechanisch durch Vernadelung oder Wasserstrahlverfestigung eines naß- oder luftgelegten Vlieses oder durch chemische Verfestigung der Vliese mit einem polymeren Bindemittel. Die Bindemittelapplikation erfolgt in der Regel durch Imprägnieren, Sprühen oder Beschichten. Zur Erhöhung der Naß- und Wärmestandfestigkeit der Vliese werden vielfach Bindemittel, welche Formaldehyd abspaltende Vernetzer enthalten, eingesetzt. Zur Vermeidung von Formaldehydemissionen ist der Fachmann bestrebt, Alternativen zu den bisher bekannten Bindemitteln zur Verfügung zu stellen.

US 6,221,973 offenbart eine formaldehydfreie, vernetzbare wässrige Zusammensetzung aus einer Polysäure, einem Polyol und einem phosphorhaltigen Reaktionsbeschleuniger zur Anwendung als Bindemittel für hitzebeständige Nonwovens, z.B. Glasfasern.

EP 990 727 offenbart Bindemittel für Mineralfasern aus einem niedermolekularen Polycarboxypolymer und einem Polyol, wobei der pH des Bindemittels nicht größer als 3,5 ist.

US 5,932,665 offenbart Bindemittel auf Polycarboxypolymerbasis, wobei bei diesem System durch Einstellen des Molekulargewichtes und der Copolymerzusammensetzung bei niedrigeren Temperaturen gehärtet werden kann, als bei vergleichbaren Systemen aus Homopolyacrylsäuren.

EP 882 074 beschreibt formaldehydfreie, wässrige Bindemittel aus einem ethylenisch ungesättigten Säureanhydrid oder einer ethylenisch ungesättigten Dicarbonsäure und einem Alkanolamin als Beschichtungsmittel, lmprägniermittel und Bindemittel für Faservliese.

Bei den bisher im Stand der Technik beschriebenen Bindemitteln werden entweder nieder- oder hochmolekulare Polycarboxylsäuren, d.h. Polycarboxylsäuren mit einer für radikalische Polymerisationen typischen Molekulargewichtsverteilung eingesetzt. Mit hochmolekularen Bindemitteln hergestellte Substrate weisen eine hohe Festigkeit auf, die Erfassung dieser Eigenschaft erfolgt z. B. über Reißkraft-Messungen. Niedermolekulare Bindemittel auf Polycarboxylsäure-Basis verteilen sich gut auf den Substraten, da sie gute Fließfähigkeiten besitzen (Messung über Dynamisch-mechanische Analyse, Bestimmung des dynamischen Speichermoduls G') weisen aber in den resultierenden Festigkeitseigenschaften Mängel auf.

Aufgabe der vorliegenden Erfindung war daher die Bereitstellung solcher Bindemittel für die Verwendung für Substrate wie Formkörper, Matten oder Platten, die gute Festigkeiten bei gleichzeitig guter Fließfähigkeit aufweisen.

Erfindungsgemäß gelöst wurde die Aufgabe durch die Verwendung von formaldehydfreien, wässrigen Bindemitteln mit breiter Molekulargewichtsverteilung, enthaltend Polymerisate, aufgebaut aus Monomeren A) und B), mit
(A) 5 bis 50 Gew.-% eines ethylenisch ungesättigten Säureanhydrids oder einer ethylenisch ungesättigten Dicarbonsäure, deren Carbonsäuregruppen eine Anhydridgruppe bilden können, oder Gemischen davon [(Monomere A)],
(B) 50 bis 95 Gew.-% einer ethylenisch ungesättigten Verbindung [(Monomere B)] sowie
(C) mindestens einen polyfunktionellen Vernetzer oder Gemische davon,
wobei die durch radikalische Polymerisation erhaltenen Polymerisate aus A) und B) bei Einordnung in ein Koordinatensystem über ihr mittleres Molekulargewicht Mw und ihre Polydispersitätswerte, in der Fläche oberhalb einer Gerade liegen, die über die Geradengleichung y= 1,25x + 20000 definiert ist und in y-Richtung parallel um mindestens + 3000, bevorzugt um 5000, insbesonders bevorzugt um 10 000 verschoben wurde, wobei die x-Achse das Gewichtsmittel des Molekulargewichtes und die y-Achse die Polydispersität mal 10000 bezeichnet.

Bei der Verwendung der erfindungsgemäßen Polycarboxylsäuren mit breiter Molekulargewichtsverteilung sorgen die hochmolekularen Anteile des Bindemittels für hohe Festigkeiten der Substrate und die niedermolekularen Anteile garantieren gleichzeitig ein gutes Fließverhalten des Bindemittels auf dem Substrat.

Das erfindungsgemäße wäßrige Bindemittel enthält ein Polymerisat, welches zu 5 bis 50 Gew.-%, besonders bevorzugt 10 bis 40 Gew.-% aus einem ethylenisch ungesättigten Säureanhydrid oder einer ethylenisch ungesättigten Dicarbonsäure, deren Carbonsäuregruppen eine Anhydridgruppe bilden können, aufgebaut ist.

Als Säureanhydride sind Dicarbonsäureanhydride bevorzugt. Geeignete ethylenisch ungesättigte Dicarbonsäuren sind im allgemeinen solche mit Carbonsäuregruppen an benachbarten Kohlenstoffatomen.

Die Carbonsäuregruppen können auch in Form ihrer Salze vorliegen.

Als Monomere A) werden bevorzugt Maleinsäure, Fumarsäure, Maleinsäureanhydrid, Itaconsäure, 1,2,3,6-Tetrahydrophthalsäure, 1,2,3,6-Tetrahydrophthalsäureanhydrid, deren Alkali- und Ammoniumsalze oder Mischungen daraus. Besonders bevorzugt sind Maleinsäure und Maleinsäureanhydrid.

### Als Monomere B) können beispielsweise eingesetzt werden:

Monoethylenisch ungesättigte C₃- bis C₁₀-Monocarbonsäuren, (Monomere b₁), wie z.B. Acrylsäure, Methacrylsäure, Ethylacrylsäure, Allylessigsäure, Crotonsäure, Vinylessigsäure, Maleinsäurehalbester wie Maleinsäuremonomethylester, deren Mischungen bzw. deren Alkali- und Ammoniumsalze.

Lineare 1-Olefine, verzweigtkettige 1-Olefine oder cyclische Olefine (Monomere b₂), wie z.B. Ethen, Propen, Buten, Isobuten, Penten, Cyclopenten, Hexen, Cyclohexen, Octen, 2,4,4-Trimethyl-1-penten gegebenenfalls in Mischung mit 2,4,4-Trimethyl-2-penten, C₈-C₁₀-Olefin, 1-Dodecen, C₁₂-C₁₄-Olefin, Octadecen, 1-Eicosen (C₂₀), C₂₀-C₂₄-Olefin; metallocenkatalytisch hergestellte Oligoolefine mit endständiger Doppelbindung, wie z.B. Oligopropen, Oligohexen und Oligooctadecen; durch kationische Polymerisation hergestellte Olefine mit hohem a-Olefin-Anteil, wie z.B. Polyisobuten.

Vinyl- und Allylalkylether mit 1 bis 40 Kohlenstoffatomen im Alkylrest, wobei der Alkylrest noch weitere Substituenten wie eine Hydroxylgruppe, eine Amino- oder Dialkylaminogruppe oder eine bzw. mehrere Alkoxylatgruppen tragen kann (Monomere b₃), wie z.B. Methylvinylether, Ethylvinylether, Propylvinylether, Isobutylvinylether, 2-Ethylhexylvinylether, Vinylcyclohexylether, Vinyl-4-hydroxybutylether, Decylvinylether, Dodecylvinylether, Octadecylvinylether, 2-(Diethylamino)ethylvinylether, 2-(Di-n-butyl-amino)ethylvinylether, Methyldiglykolvinylether sowie die entsprechenden Allylether bzw. deren Mischungen.

Acrylamide und alkylsubstituierte Acrylamide (Monomere b₄), wie z.B. Acrylamid, Methacrylamid, N-tert.-Butylacrylamid, N-Methyl(meth)acrylamid.

Sulfogruppenhaltige Monomere (Monomere b₅), wie z.B. Allylsulfonsäure, Methallylsulfonsäure, Styrolsulfonat, Vinylsulfonsäure, Allyloxybenzolsulfonsäure, 2-Acrylamido-2-methylpropansulfonsäure, deren entsprechende Alkali- oder Ammoniumsalze bzw. deren Mischungen.

C₁- bis C₈-Alkylester oder C₁- bis C₄-Hydroxyalkylester der Acrylsäure, Methacrylsäure oder Maleinsäure oder Ester von mit 2 bis 50 Mol Ethylenoxid, Propylenoxid, Butylenoxid oder Mischungen davon alkoxylierten C₁- bis C₁₈-Alkoholen mit Acrylsäure, Methacrylsäure oder Maleinsäure (Monomere b₆), wie z.B. Methyl(meth)acrylat, Ethyl(meth)acrylat, Propyl(meth)acrylat, Isopropyl(meth) acrylat, Butyl(meth)acrylat, Hexyl(meth)acrylat, 2-Ethylhexyl (meth)acrylat, Hydroxyethyl(meth)acrylat, Hydroxypropyl(meth) acrylat, Butandiol-1,4-monoacrylat, Maleinsäuredibutylester, Ethyldiglykolacrylat, Methylpolyglykolacrylat (11 EO), (Meth)acrylsäureester von mit 3,5,7,10 oder 30 Mol Ethylenoxid umgesetztem C₁₃/C₁₅-Oxoalkohol bzw. deren Mischungen.

Alkylaminoalkyl(meth)acrylate oder Alkylaminoalkyl(meth)acrylamide oder deren Quaternisierungsprodukte (Monomere b₇), wie z.B. 2-(N,N-Dimethylamino)ethyl(meth)acrylat, 3-(N,N-Dimethylamino)propyl(meth)acrylat, 2-(N,N,N-Trimethylammonium)ethyl (meth)acrylat-chlorid, 2-Dimethylaminoethyl(meth)acrylamid, 3-Dimethylaminopropyl(meth)acrylamid, 3-Trimethylammoniumpropyl(meth)acrylamid-chlorid.

Vinyl- und Allylester von C₁- bis C₃₀-Monocarbonsäuren (Monomere b₈), wie z.B. Vinylformiat, Vinylacetat, Vinylpropionat, Vinylbutyrat, Vinylvalerat, Vinyl-2-ethylhexanoat, Vinylnonoat, Vinyldecanoat, Vinylpivalat, Vinylpalmitat, Vinylstearat, Vinyllaurat.

Als weitere Monomere b₉ seien noch genannt:

N-Vinylformamid, N-Vinyl-N-methylformamid, Styrol, α-Methylstyrol, 3-Methylstyrol, Butadien, N-Vinylpyrrolidon, N-Vinylimidazol, 1-Vinyl-2-methylimidazol, 1-Vinyl-2-methyl-imidazolin, N-Vinylcaprolactam, Acrylnitril, Methacrylnitril, Allylalkohol, 2-Vinylpyridin, 4-Vinylpyridin, Diallyldimethylammoniumchlorid, Vinylidenchlorid, Vinylchlorid, Acrolein, Methacrolein und Vinylcarbazol bzw. Mischungen davon.

Das Polymerisat enthält neben Monomeren A) noch Monomere B) in Mengen von 50 bis 95, besonders bevorzugt von 60 bis 90 Gew.-%.

Bevorzugte Monomere sind Acrylsäure, Methacrylsäure, Ester der Acryl- oder Methacrylsäure (z.B. Methyl(meth)acrylat, Ethyl(meth)acrylat, Butyl(meth)acrylat) Ethen, Propen, Buten, Isobuten, Cyclopenten, Methylvinylether, Ethylvinylether, Acrylamid, 2-Acrylamido-2-methylpropansulfonsäure, Vinylacetat, Styrol, Butadien, Acrylnitril, Maleinsäuremonomethylester bzw. Mischungen davon.

Besonders bevorzugt sind Acrylsäure, Methacrylsäure, Methyl(meth)acrylat, Ethyl-(meth)acrylat, Butyl(meth)acrylat , Ethen, Acrylamid, Styrol und Acrylnitril, Maleinsäuremonomethylester bzw. Mischungen davon.

Ganz besonders bevorzugt sind Acrylsäure, Methacrylsäure und Methyl(meth)acrylat, Ethyl(meth)acrylat, Butyl(meth)acrylat, Maleinsäuremonomethylester bzw. Mischungen davon.

Die Polymerisate können nach üblichen Polymerisationsverfahren hergestellt werden, z.B. durch Substanz-, Emulsions-, Suspensions-, Dispersions-, Fällungs- oder Lösungspolymerisation. Bei den genannten Polymerisationsverfahren wird bevorzugt unter Ausschluß von Sauerstoff gearbeitet, vorzugsweise in einem Stickstoffstrom. Für alle Polymerisationsmethoden werden die üblichen Apparaturen verwendet, z.B. Rührkessel, Rührkesselkaskaden, Autoklaven, Rohrreaktoren und Kneter. Bevorzugt wird nach der Methode der Lösungs-, Emulsions-, Fällungs- oder Suspensionspolymerisation gearbeitet. Besonders bevorzugt sind die Methoden der Lösungs- und Emulsionspolymerisation. Die Polymerisation kann in Lösungs- oder Verdünnungsmitteln, wie z.B. Toluol, o-Xylol, p-Xylol, Cumol, Chlorbenzol, Ethylbenzol, technischen Mischungen von Alkylaromaten, Cyclohexan, technischen Aliphatenmischungen, Aceton, Cyclohexanon, Tetrahydrofuran, Dioxan, Glykolen und Glykolderivaten, Polyalkylenglykolen und deren Derivate, Diethylether, tert.-Butylmethylether, Essigsäuremethylester, Isopropanol, Ethanol, Wasser oder Mischungen wie z.B. Isopropanol/Wasser-Mischungen ausgeführt werden. Vorzugsweise wird als Lösungs- oder Verdünnungsmittel Wasser gegebenenfalls mit Anteilen bis zu 60 Gew.-% an Alkoholen oder Glykolen verwendet. Besonders bevorzugt wird Wasser eingesetzt.

Die Polymerisation kann bei Temperaturen von 20 bis 300, vorzugsweise von 60 bis 200°C durchgeführt werden. Je nach Wahl der Polymerisationsbedingungen lassen sich gewichtsmittlere Molekulargewichte z.B. von 800 bis 5 000 000, insbesondere von 1 000 bis 1 000 000 einstellen. Bevorzugt liegen die gewichtsmittleren Molekulargewichte M_{w} über 3000. Besonders bevorzugt sind gewichtsmittlere Molekulargewichte von 3 000 bis 600 000. M_{w} wird bestimmt durch Gelpermeationschromatographie (ausführliche Beschreibung in Beispielen).

Die Polymerisate enthaltend die Monomere A) und B) liegen bei bei Einordnung in ein Koordinatensystem über ihr mittleres Molekulargewicht Mw und ihre Polydispersitätswerte, in der Fläche oberhalb einer Geraden, die über die Geradengleichung y= 1,25x + 20000 definiert ist und in y-Richtung parallel um + 5000 verschoben wurde, wobei die x-Achse das Gewichtsmittel des Molekulargewichtes und die y-Achse die Polydispersität mal 10000 bezeichnet.

Die Polymerisation wird vorzugsweise in Gegenwart von Radikale bildenden Verbindungen durchgeführt. Man benötigt von diesen Verbindungen bis zu 30, vorzugsweise 0,05 bis 15, besonders bevorzugt 0,2 bis 8 Gew.-%, bezogen auf die bei der Polymerisation eingesetzten Monomeren. Bei mehrkomponentigen Initiatorsystemen (z.B. Redox-Initiatorsystemen) beziehen sich die vorstehenden Gewichtsangaben auf die Summe der Komponenten.

Geeignete Polymerisationsinitiatoren sind beispielsweise Peroxide, Hydroperoxide, Peroxidisulfate, Percarbonate, Peroxiester, Wasserstoffperoxid und Azoverbindungen. Beispiele für Initiatoren, die wasserlöslich oder auch wasserunlöslich sein können, sind Wasserstoffperoxid, Dibenzoylperoxid, Dicyclohexylperoxidicarbonat, Dilauroylperoxid, Methylethylketonperoxid, Di-tert.-Butylperoxid, Acetylacetonperoxid, tert.-Butylhydroperoxid, Cumolhydroperoxid, tert.-Butylperneodecanoat, te rt.-Amylperpivalat, tert.-Butylperpivalat, tert.-Butylperneohexanoat, tert.-Butylper-2-ethylhexanoat, tert.-Butyl-perbenzoat, Lithium-, Natrium-, Kalium- und Ammoniumperoxidisulfat, Azodüsobutyronitril, 2,2'-Azobis(2-amidinopropan)dihydrochlorid, 2-(Carbamoylazo)isobutyronitril und 4,4-Azobis(4-cyanovaleriansäure).

Die Initiatoren können allein oder in Mischung untereinander angewendet werden, z.B. Mischungen aus Wasserstoffperoxid und Natriumperoxidisulfat. Für die Polymerisation in wäßrigem Medium werden bevorzugt wasserlösliche Initiatoren eingesetzt.

Auch die bekannten Redox-Initiatorsysteme können als Polymerisationsinitiatoren verwendet werden. Solche Redox-Initiatorsysteme enthalten mindestens eine peroxidhaltige Verbindung in Kombination mit einem Redox-Coinitiator z.B. reduzierend wirkenden Schwefelverbindungen, beispielsweise Bisulfite, Sulfite, Thiosulfate, Dithionite und Tetrathionate von Alkalimetallen und Ammoniumverbindungen. So kann man Kombinationen von Peroxodisulfaten mit Alkalimetall- oder Ammoniumhydrogensulfiten einsetzen, z.B. Ammoniumperoxidisulfat und Ammoniumdisulfit. Die Menge der peroxidhaltigen Verbindung zum Redox-Coinitiator beträgt 30:1 bis 0,05:1.

In Kombination mit den Initiatoren bzw. den Redoxinitiatorsystemen können zusätzlich Übergangsmetallkatalysatoren eingesetzt werden, z.B. Salze von Eisen, Kobalt, Nickel, Kupfer, Vanadium und Mangan. Geeignete Salz sind z.B. Eisen-II-sulfat, Kobalt-IIchlorid, Nickel-II-sulfat, Kupfer-I-chlorid. Bezogen auf Monomeren wird das reduzierend wirkende Übergangsmetallsalz in einer Konzentration von 0,1 ppm bis 1 000 ppm eingesetzt. So kann man Kombinationen von Wasserstoffperoxid mit Eisen-II-Salzen einsetzen, wie beispielsweise 0,5 bis 30 % Wasserstoffperoxid und 0,1 bis 500 ppm Mohrsches Salz.

Auch bei der Polymerisation in organischen Lösungsmitteln können in Kombination mit den obengenannten Initiatoren Redox-Coinitiatoren und/oder Übergangsmetallkatalysatoren mitverwendet werden, z.B. Benzoin, Dimethylanilin, Ascorbinsäure sowie organisch lösliche Komplexe von Schwermetallen, wie Kupfer, Cobalt, Eisen, Mangan, Nickel und Chrom. Die üblicherweise verwendeten Mengen an Redox-Coinitiatoren bzw. Übergangsmetallkatalysatoren betragen hier üblicherweise etwa 0,1 bis 1 000 ppm, bezogen auf die eingesetzten Mengen an Monomeren.

Falls die Reaktionsmischung an der unteren Grenze des für die Polymerisation in Betracht kommenden Temperaturbereiches anpolymerisiert und anschließend bei einer höheren Temperatur auspolymerisiert wird, ist es zweckmäßig, mindestens zwei verschiedene Initiatoren zu verwenden, die bei unterschiedlichen Temperaturen zerfallen, so daß in jedem Temperaturintervall eine ausreichende Konzentration an Radikalen zur Verfügung steht.

Der Initiator kann auch in Stufen zugegeben werden, bzw. die Geschwindigkeit der Initiator-Zugabe kann über die Zeit variiert werden.

Um Polymerisate mit niedrigem mittleren Molekulargewicht herzustellen, ist es oft zweckmäßig, die Copolymerisation in Gegenwart von Reglern durchzuführen. Hierfür können übliche Regler verwendet werden, wie beispielsweise organische SH-Gruppen enthaltende Verbindungen, wie 2-Mercaptoethanol, 2-Mercaptopropanol, Mercaptoessigsäure, tert.-Butylmercaptan, n-Octylmercaptan, n-Dodecylmercaptan und tert.-Dodecylmercaptan, C₁- bis C₄-Aldehyde, wie Formaldehyd, Acetaldehyd, Propionaldehyd, Hydroxylammoniumsalze wie Hydroxylammoniumsulfat, Ameisensäure, Natriumbisulfit, hypophosphorige Säure bzw. deren Salze oder Isopropanol. Die Polymerisationsregler werden im allgemeinen in Mengen von 0,1 bis 20 Gew.-%, bezogen auf die Monomeren eingesetzt. Auch durch die Wahl des geeigneten Lösungsmittels kann auf das mittlere Molekulargewicht Einfluß genommen werden. So führt die Polymerisation in Gegenwart von Verdünnungsmitteln mit benzylischen H-Atomen, oder in Gegenwart von sekundären Alkoholen wie z. B. Isopropanol zu einer Verringerung des mittleren Molekulargewichtes durch Kettenübertragung.
Polymerisate mit geringem Molekulargewicht erhält man auch durch: Variation der Temperatur und/oder der Initiator-Konzentration.

Um höhermolekulare Copolymerisate herzustellen, ist es oft zweckmäßig, bei der Polymerisation in Gegenwart von Vernetzern zu arbeiten. Solche Vernetzer sind Verbindungen mit zwei oder mehreren ethylenisch ungesättigten Gruppen, wie beispielsweise Diacrylate oder Dimethacrylate von mindestens zweiwertigen gesättigten Alkoholen, wie z.B. Ethylenglykoldiacrylat, Ethylenglykoldimethacrylat, 1,2-Propylenglykoldiacrylat, 1,2-Propylenglykoldimethacrylat, Butandiol-1,4-diacrylat, Butandiol-1,4-dimethacrylat, Hexandioldiacrylat, Hexandioldimethacrylat, Neopentylglykoldiacrylat, Neopentylglykoldimethacrylat, 3-Methylpentandioldiacrylat und 3-Methylpentandi oldimethacrylat. Auch die Acrylsäure- und Methacrylsäureester von Alkoholen mit mehr als 2 OH-Gruppen können als Vernetzer eingesetzt werden, z.B. Trimethylolpropantriacrylat oder Trimethylolpropantrimethacrylat. Eine weitere Klasse von Vernetzern sind Diacrylate oder Dimethacrylate von Polyethylenglykolen oder Polypropylenglykol en mit Molekulargewichten von jeweils 200 bis 9 000. Polyethylenglykole bzw. Polypropylenglykole, die für de Herstellung der Diacrylate oder Dimethacrylate verwendet werden, haben vorzugsweise ein Molekulargewicht von jeweils 400 bis 2 000. Außer den Homopolymerisaten des Ethylenoxids bzw. Propylenoxids können auch Blockcopolymerisate aus Ethylenoxid und Propylenoxid oder Copolymerisate aus Ethylenoxid und Propylenoxid eingesetzt werden, die die Ethylenoxid- und Propylenoxid-Einheiten statistisch verteilt enthalten. Auch die Oligomeren des Ethylenoxids bzw. Propylenoxids sind für die Herstellung der Vernetzer geeignet, z.B. Diethylenglykoldiacrylat, Diethylenglykoldimethacrylat, Triethylenglykoldiacrylat, Triethylenglykoldimethacrylat, Tetra ethylenglykoldiacrylat und/oder Tetraethylenglykoldimethacrylat.

Als Vernetzer eignen sich weiterhin Vinylacrylat, Vinylmethacrylat, Vinylitaconat, Adipinsäuredivinylester, Butandioldivinylether, Trimethylolpropantrivinylether, Allylacrylat, Allylmethacrylat, Pentaerithrittriallylether, Triallylsaccharose, Pentaallylsaccharose, Pentaallylsucrose, Methylenbis(meth)acrylamid, Divinylethylenharnstoff, Divinylpropylenharnstoff, Divinylbenzol, Divinyldioxan, Triallylcyanurat, Tetraallylsilan, Tetravinylsilan und Bis- oder Polyacrylsiloxane (z.B. Tegomereä der Th. Goldschmidt AG). Die Vernetzer werden vorzugsweise in Mengen von 10 ppm bis 5 Gew.-%, bezogen auf die zu polymerisierenden Monomere, eingesetzt.

Wird nach der Methode der Emulsions-, Fällungs-, Suspensions- oder Dispersionspolymerisation gearbeitet, so kann es vorteilhaft sein, die Polymertröpfchen bzw. Polymerteilchen durch grenzflächenaktive Hilfsstoffe zu stabilisieren. Typischerweise verwendet man hierzu Emulgatoren oder Schutzkolloide. Es kommen anionische, nichtionische, kationische und amphotere Emulgatoren in Betracht. Anionische Emulgatoren sind beispielsweise Alkylbenzolsulfonsäuren, sulfonierte Fettsäuren, Sulfosuccinate, Fettalkoholsulfate, Alkylphenolsulfate und Fettalkoholethersulfate. Als nichtionische Emulgatoren können beispielsweise Alkylphenolethoxylate, Primäralkoholethoxilate, Fettsäureethoxilate, Alkanolamidethoxilate, Fettaminethoxilate, EO/PO-Blockcopolymere und Alkylpolyglucoside verwendet werden. Als kationische bzw. amphotere Emulgatoren werden beispielsweise verwendet: Quaternisierte Aminalkoxylate, Alkylbetaine, Alkylamidobetaine und Sulfobetaine.

Typische Schutzkolloide sind beispielsweise Cellulosederivate, Polyethylenglykol, Polypropylenglykol, Copolymerisate aus Ethylenglykol und Propylenglykol, Polyvinylacetat, Polyvinylalkohol, Polyvinylether, Stärke und Stärkederivate, Dextran, Polyvinylpyrrolidon, Polyvinylpyridin, Polyethylenimin, Polyvinylimidazol, Polyvinylsuccinimid, Polyvinyl-2-methylsuccinimid, Polyvinyl-1,3-oxazolidon-2, Polyvinyl-2-methylimidazolin und Maleinsäure bzw. Maleinsäureanhydrid enthaltende Copolymerisate, wie sie z.B. in DE 2 501 123 beschrieben sind.

Die Emulgatoren oder Schutzkolloide werden üblicherweise in Konzentrationen von 0,05 bis 20 Gew.-%, bezogen auf die Monomere, eingesetzt.

Wird in wäßriger Lösung oder Verdünnung polymerisiert, so können die Monomere vor oder während der Polymerisation ganz oder teilweise durch Basen neutralisiert werden. Als Basen kommen beispielsweise Alkali- oder Erdalkaliverbindungen wie Natriumhydroxid, Kaliumhydroxid, Calciumhydroxid, Magnesiumoxid, Natriumcarbonat; Ammoniak; primäre, sekundäre und tertiäre Amine, wie Ethylamin, Propylamin, Monoisopropylamin, Monobutylamin, Hexylamin, Ethanolamin, Dimethylamin, Diethylamin, Di-n-propylamin, Tributylamin, Triethanolamin, Dimethoxyethylamin, 2- Ethoxyethylamin, 3-Ethoxypropylamin, Dimethylethanolamin, Diisopropanolamin oder Morpholin in Frage.

Weiterhin können auch mehrbasische Amine zur Neutralisation eingesetzt werden, wie z.B. Ethylendiamin, 2-Diethylaminethylamin, 2,3-Diaminopropan, 1,2-Propylendiamin, Dimethylaminopropylamin, Neopentandiamin, Hexamethylendiamin, 4,9-Dioxadodecan-1,12-diamin, Polyethylenimin oder Polyvinylamin.

Vorzugsweise werden zur partiellen oder vollständigen Neutralisation der ethylenisch ungesättigten Carbonsäuren vor oder während der Polymerisation Ammoniak, Triethanolamin und Diethanolamin eingesetzt.

Besonders bevorzugt werden die ethylenisch ungesättigten Carbonsäuren vor und während der Polymerisation nicht neutralisiert. Bevorzugt wird auch nach der Polymerisation kein Neutralisierungsmittel, abgesehen vom Alkanolam in B), zugesetzt. Die Durchführung der Polymerisation kann nach einer Vielzahl von Varianten kontinuierlich oder diskontinuierlich durchgeführt werden. Üblicherweise legt man einen Teil der Monomeren gegebenenfalls in einem geeigneten Verdünnungsmittel oder Lösungsmittel und gegebenenfalls in Anwesenheit eines Emulgators, eines Schutzkolloids oder weiterer Hilfsstoffe vor, inertisiert, und erhöht die Temperatur bis zum Erreichen der gewünschten Polymerisationstemperatur. Es kann allerdings auch lediglich ein geeignegeeignetes Verdünnungsmittel vorgelegt sein. Innerhalb eines definierten Zeitraumes werden der Radikalinitiator, weitere Monomere und sonstige Hilfsstoffe, wie z.B. Regler oder Vernetzer jeweils gegebenenfalls in einem Verdünnungsmittel zudosiert. Die Zulaufzeiten können unterschiedlich lang gewählt werden. Beispielsweise kann man für den Initiatorzulauf eine längere Zulaufzeit wählen als für den Monomerzulauf.

Die Polymere mit breiter Molekulargewichtsverteilung können auch in-situ in einem Schritt hergestellt werden, indem zuerst der niedermolekulare Anteil synthetisiert wird (bei bestimmter Initiatorkonzentration/Temperatur) und nach 0-100% Zugabe der Monomeren, die Initiatorkonzentration in der Reaktionsmischung abgesenkt und/oder die Temperatur reduziert wird (stufenweise oder kontinuierlich); oder die multimodalen Polymere können in-situ in einem Schritt hergestellt werden, indem zuerst der hochmolekulare Anteil synthetisiert wird (bei bestimmter Initiatorkonzentration/Temperatur) und nach 100-0% Zugabe der Monomeren, die Initiatorkonzentration in der Reaktionsmischung erhöht und/oder die Temperatur erhöht wird.

Wird das Polymerisat nach dem Verfahren einer Lösungspolymerisation in Wasser gewonnen, so ist üblicherweise keine Abtrennung des Lösungsmittels notwendig. Besteht dennoch der Wunsch, das Polymerisat zu isolieren, kann z.B. eine Sprühtrocknung durchgeführt werden.

Wird das Polymerisat nach der Methode einer Lösungs-, Fällungs- oder Suspensionspolymerisation in einem wasserdampfflüchtigen Lösungsmittel oder Lösungsmittelgemisch hergestellt, so kann das Lösungsmittel durch Einleiten von Wasserdampf abgetrennt werden, um so zu einer wäßrigen Lösung oder Dispersion zu gelangen. Das Polymerisat kann von dem organischen Verdünnungsmittel auch durch einen Trocknungsprozeß abgetrennt werden.

Bevorzugt liegen die Polymerisate aus A) und B) in Form einer wäßrigen Dispersion oder Lösung mit Feststoffgehalten von vorzugsweise 10 bis 80 Gew.-%, insbesondere 40 bis 65 Gew.-% vor.

Das Polymerisat kann auch durch Pfropfung von Maleinsäure bzw. Maleinsäureanhydrid bzw. einer Maleinsäure oder Maleinsäureanhydrid enthaltenden Monomermischung auf eine Pfropfgrundlage erhalten werden. Geeignete Pfropfgrundlagen sind beispielsweise Monosaccharide, Oligosaccharide, modifizierte Polysaccharide und Alkylpolyglykolether. Solche Pfropfpolymerisate sind beispielsweise in DE 4 003 172 und EP 116 930 beschrieben.

Unter den polyfunktionellen Vernetzern der Komponente C) versteht man beispielsweise Alkanolamine mit mindestens zwei OH-Gruppen. Bevorzugt sind Alkanolamine der Formel I 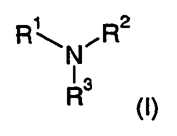 in der R¹ für ein H-Atom, eine C₁-C₁₀-Alkylgruppe oder eine C₁-C₁₀-Hydroxyalkylgruppe steht und R² und R³ für eine C₁-C₁₀-Hydroxyalkylgruppe stehen.

Besonders bevorzugt stehen R² und R³ unabhängig voneinander für eine C₂-C₅-Hydroxyalkylgruppe und R¹ für ein H-Atom, eine C₁-C₅-Alkylgruppe oder eine C₂-C₅-Hydroxyalkylgruppe.

Als Verbindungen der Formel 1 seien z.B. Diethanolamin, Triethanolamin, Diisopropanolamin, Triisopropanolamin, Methyldiethanolamin, Butyldiethanolamin und Methyldiisopropanolamin genannt. Besonders bevorzugt ist Triethanolamin.

Polyfunktionelle Vernetzer C) können auch bi- oder multifunktionelle Alkohole sein, beispielsweise beispielsweise Glycerin, methylolierte Melamine oder Phenole.

Weitere polyfunktionelle Vernetzer, die als Komponente C) eingesetzt werden können sind in der EP 902 796 beschrieben, beispielsweise Trimethylolpropan, Pentaerythrit, Neopentylglykol, Glucose, Sorbit, Hexandiol, Lysin, Polyvinylalkohol.

Vorzugsweise werden als Komponente C) Alkanolamine eingesetzt, insbesonders bevorzugt Triethanolamin.

Zur Herstellung der erfindungsgemäßen formaldehydfreien Bindemittel werden das Polymerisat aus A) und B) und die Komponente C) bevorzugt in einem solchen Verhältnis zueinander eingesetzt, dass das Molverhältnis von Carboxylgruppen der Komponenten A) und B) und der Hydroxylgruppen der Komponente C) 20:1 bis 1:1, bevorzugt 8:1 bis 5:1 und besonders bevorzugt 5:1 bis 1,7:1 beträgt (die Anhydridgruppen werden hierbei als 2 Carboxylgruppen berechnet).

Die Herstellung der erfindungsgemäßen formaldehydfreien, wäßrigen Bindemittel erfolgt z.B. einfach durch Zugabe der Komponente C) zur wäßrigen Dispersion oder Lösung der Polymerisate aus A) und B).

Die erfindungsgemäßen Bindemittel enthalten vorzugsweise weniger als 1,0 Gew.-%, besonders bevorzugt weniger als 0,5 Gew.-% und ganz besonders bevorzugt weniger als 0,3 Gew.-%, insbesondere weniger als 0,1 Gew.-%, bezogen auf die Summe aus A), B) und C) eines Phosphor enthaltenden Reaktionsbeschleunigers. Phosphor enthaltende Reaktionsbeschleuniger sind in EP 651 088 und EP 583 086, DE 196 21523, EP 826 710 und genannt. Es handelt sich dabei insbesondere um Alkali metallhypophoshpite, -phosphite, -polyphosphate, -dihydrogenphosphate, Polyphosphorsäure, Hypophosphorsäure, Phosphorsäure, Alkylphosphinsäure oder Oligomere bzw. Polymere dieser Salze und Säuren.

Die erfindungsgemäßen Bindemittel enthalten vorzugsweise keine Phosphor enthaltenden Reaktionsbeschleuniger bzw. keine zur Reaktionsbeschleunigung wirksame Mengen einer Phosphor enthaltenden Verbindung. Die erfindungsgemäßen Bindemittel können einen Veresterungskatalysator enthalten, wie z.B. Schwefelsäure oder p-Toluolsulfonsäure. Die erfindungsgemäßen Bindemittel können als Imprägnierungsmittel oder Beschichtungsmittel Verwendung finden. Die erfindungsgemäßen Bindemittel können einziger Bestandteil der Imprägnierungsmittel oder Beschichtungsmittel sein. Die Imprägnierungsmittel oder Beschichtungsmittel können jedoch auch noch weitere für die jeweilig beabsichtigte Verwendung geeignete Zusatzstoffe enthalten. In Betracht kommen z.B. Farbstoffe, Pigmente, Biozide, Plastifizierungsmittel, Verdickungsmittel, Haftverbesserer (z.B. Alkoxysilane, wie γ-Aminopropyltriethoxysilan, Fa. Witco: Silquest A-1100 Silan), Reduktionsmittel und Umesterungskatalysatoren oder Brandschutzmittel (wie Aluminium-Silikate, Aluminium-Hydroxide, Borate oder Phosphate), Melamin/Formaldehydharze, Dispersionen (Acrylate, Styrol-Butadien-Dispersionen), Epoxid-Harze, Polyurethan-Harze, Emulgatoren (ionisch, nichtionisch), Hydrophobierungsmittel (Silicone) oder Retentionsmittel.

Die erfindungsgemäßen Bindemittel haben nach Trocknung (bei 50°C, Dauer (72 Stunden) zu einem Film der Dicke 0,3 bis 1 mm und anschließender 15-minütiger Härtung bei 150°C an der Luft vorzugsweise einen Gelgehalt über 50 Gew.-%, besonders bevorzugt über 60 Gew.-%, ganz besonders bevorzugt über 70 Gew.-% und insbesondere über 75 Gew.-%.

Nach Abschluß der Härtung werden die gehärteten Filme 48 Stunden in Wasser bei 23°C gelagert. Lösliche Anteile verbleiben dabei im Wasser. Der Film wird dann bei 50°C bis zur Gewichtskonstanz getrocknet und gewogen. Das Gewicht entspricht dem Gelgehalt, der Gelgehalt wird berechnet in Gew.-%, bezogen auf das Gewicht vor Abtrennen der löslichen Anteile. Gewichtskonstanz ist erreicht, wenn die Gewichtsabnahme über einen Zeitraum von 3 Stunden weniger als 0,5 insbesondere weniger als 0,1 Gew.-% beträgt.

Die erfindungsgemäßen Bindemittel eignen sich als Bindemittel für Substrate, wie z.B. zur Herstellung von Formkörpern aus Fasern, Schnitzeln oder Spänen, Matten oder Platten, vorzugsweise für faserige und körnige Substrate. Als Faservliese seien z. B. Vliese aus Cellulose, Celluloseacetat, Ester und Ether der Cellulose, Baumwolle, Hanf, Sisal, Jute, Flachs, Kokos- oder Bananenfasern, Kork, tierische Fasern, wie Wolle oder Haare und insbesondere Vliese von synthetischen oder anorganischen Fasern, z.B. Aramid-, Kohlenstoff-, Polyacrylnitril-, Polyester-, Mineral-, PVC- oder Glasfasern genannt.

Im Falle der Verwendung als Bindemittel für Faservliese können die erfindungsgemäßen Bindemittel z. B. folgende Zusatzstoffe enthalten: Silikate, Silikone, borhaltige Verbindungen, Gleitmittel, Benetzungsmittel.

Bevorzugt sind Glasfaservliese. Die ungebundenen Faservliese (Rohfaservliese), insbesondere aus Glasfasern, werden durch das erfindungsgemäße Bindemittel gebunden, d.h. verfestigt.

Dazu wird das erfindungsgemäße Bindemittel vorzugsweise im Gewichtsverhältnis Faser/Polymerisat (fest) von 25:1 bis 1:1, besonders bevorzugt von 20:1 bis 3:1 auf das Rohfaservlies z.B. durch Beschichten, Sprühen, Imprägnieren, Tränken aufgebracht.

Das erfindungsgemäße Bindemittel wird dabei vorzugsweise in Form einer verdünnten wäßrigen Zubereitung mit 95 bis 40 Gew.-% Wasser verwendet.

Nach dem Aufbringen des erfindungsgemäßen Bindemittels auf das Rohfaservlies erfolgt im allgemeinen eine Trocknung vorzugsweise bei 100 bis 400, insbesondere 130 bis 280°C, ganz besonders bevorzugt 130 bis 230°C über einen Zeitraum von vorzugsweise 10 Sekunden bis 10 Minuten, insbesondere von 10 Sekunden bis 3 Minuten.

Das erhaltene, gebundene Faservlies weist eine hohe Festigkeit im trockenen und nassen Zustand auf. Eine Vergilbung des gebundenen Faservlieses nach der Trocknung ist nicht bzw. kaum zu beobachten. Die erfindungsgemäßen Bindemittel erlauben insbesondere kurze Trocknungszeiten und auch niedrige Trocknungstemperaturen.

Die gebundenen Faservliese, insbesondere Glasfaservliese eignen sich zur Verwendung als bzw. in Dachbahnen, als Trägermaterialien für Tapeten oder als Inliner bzw. Trägermaterial für Fußbodenbeläge z.B. aus PVC. PVC-Fußbodenbeläge, die unter Verwendung von mit den erfindungsgemäßen Bindemitteln verfestigten Glasfaservliesen und PVC-Plastisolen hergestellt wurden, weisen eine nur geringe Vergilbungsneigung auf.

Bei der Verwendung als Dachbahnen werden die gebundenen Faservliese im allgemeinen mit Bitumen beschichtet.

Die erfindungsgemäßen Bindemittel können weiterhin als Bindemittel für Dämmstoffe aus den oben genannten Fasern, insbesondere anorganischen Fasern wie Mineralfasern und Glasfasern verwendet werden.

Die in der Praxis bisher üblichen Bindemittel auf Basis von Phenol-Formaldehyd-Kondensationsharzen haben den Nachteil, daß sich bei der Herstel lung der Dämmstoffe nicht unerhebliche Mengen Phenol, Formaldehyd sowie niedermolekulare Kondensationsprodukte davon verflüchtigen. Die Zurückhaltung dieser umweltschädlichen Stoffe ist mit großem Aufwand verbunden. Weiterhin kann es zur Freisetzung von Formaldehyd aus den fertigen Dämmstoffprodukten kommen, was insbesondere bei einer Verwendung in Wohngebäuden unerwünscht ist.

Fasern für Dämmstoffe werden technisch in großem Umfang durch Verspinnen von Schmelzen der entsprechenden mineralischen Rohstoffe hergestellt (siehe z.B. EP 567 480).

Die wäßrige Bindemittel-Lösung wird bei der Herstellung von Dämmstoffen vorzugsweise schon auf die frisch hergestellten, noch heißen Fasern aufgesprüht. Das Wasser verdampft überwiegend und das Harz bleibt im wesentlichen unausgehärtet als viskoses "high-solid" Material auf den Fasern haften. Aus den Fasern werden so bindemittelhaltige Fasermatten hergestellt und diese von geeigneten Förderbändern durch einen Härtungsofen weitertransportiert. Dort härtet das Harz bei Ofentemperaturen von ca. 150 bis 350°C aus. Nach dem Härtungsofen werden die Dämmstoffmatten in geeigneter Weise konfektioniert, d.h. in eine für den Endanwender geeignete Form zugeschnitten.

Die Bindemittel können in der Praxis der Dämmstoffherstellung übliche Hilfs- und Zusatzstoffe enthalten. Beispiele dafür sind Hydrophobierungsmittel wie z.B. Silikonöle, Alkoxysilane wie z.B. 3-Aminopropyltriethoxysilan als Kupplungsagens, lösliche oder emulgierbare Öle als Gleitmittel und Staubbindemittel sowie Benetzungshilfsmittel.

Der überwiegende Anteil der in den Dämmstoffen verwendeten Mineral- oder Glasfasern hat einen Durchmesser zwischen 0,5 und 20 µm und eine Länge zwischen 0,5 und 10 cm.

Übliche Anwendungsformen der Dämmstoffe sind rechteckige oder dreieckige Dämmstoffplatten sowie aufgerollte Dämmstoffbahnen. Die Dicke und Dichte der Dämmstoffe kann in weiten Grenzen variiert werden, wodurch sich Produkte mit der gewünschten Isolationswirkung herstellen lassen. Übliche Dicken liegen zwischen 1 und 20 cm, übliche Dichten im Bereich zwischen 5 und 300 kg/m³. Die Isolierwirkung wird die durch die thermische Leitfähigkeit Lambda (in mW/m⁰K) charakterisiert. Die Dämmplatten haben eine hohe Trocken- und Naßfestigkeit.

Die erfindungsgemäßen Bindemittel eignen sich auch zur Herstellung von Schleifvliesen, z. B. Topfreinigern bzw. Topfkratzern auf Basis von gebundenen Faservliesen. Als Fasern kommen natürliche Fasern und synthetische Fasern (z. B. Nylon), in Betracht. Im Falle der Topfreiniger bzw. -kratzer erfolgt die Verfestigung der Faservliese bevorzugt im Sprühverfahren.

Die Bindemittel eignen sich weiterhin zur Herstellung von Holzwerkstoffen wie Holzspanplatten und Holzfaserplatten (vgl. Ullmanns Encyclopädie der technischen Chemie, 4. Auflage 1976, Band 12, S. 709-727), die durch Verleimung von zerteiltem Holz wie z.B. Holzspänen und Holzfasern hergestellt werden können.

Die Wasserfestigkeit von Holzwerkstoffen kann erhöht werden, indem man dem Bindemittel eine handelsübliche wäßrige Paraffindispersion oder andere Hydrophobierungsmittel zusetzt, bzw. diese Hydrophobierungsmittel vorab oder nachträglich den Fasern, Schnitzeln oder Spänen zusetzt.

Die Herstellung von Spanplatten ist allgemein bekannt und wird beispielsweise in H.J. Deppe, K. Ernst Taschenbuch der Spanplattentechnik, 2. Auflage, Verlag Leinfelden 1982, beschrieben.

Es werden bevorzugt Späne eingesetzt, deren mittlere Spandicke im Mittel bei 0,1 bis 2 mm, insbesondere 0,2 bis 0,5 mm liegt, und die weniger als 6 Gew.-% Wasser enthalten. Das Bindemittel wird möglichst gleichmäßig auf die Holzspäne aufgetragen, wobei das Gewichts-Verhältnis Bindemittel:Holzspäne bezogen auf den Feststoff (berechnet als A) + B)) vorzugsweise 0,02:1 bis 0,3:1 beträgt. Eine gleichmäßige Verteilung läßt sich beispielsweise erreichen, indem man das Bindemittel in feinverteilter Form auf die Späne aufsprüht.

Die beleimten Holzspäne werden anschließend zu einer Schicht mit möglichst gleichmäßiger Oberfläche ausgestreut, wobei sich die Dicke der Schicht nach der gewünschten Dicke der fertigen Spanplatte richtet. Die Streuschicht wird bei einer Temperatur von z.B. 100 bis 250°C, bevorzugt von 140 bis 225°C durch Anwendung von Drücken von üblicherweise 10 bis 750 bar zu einer maßhaltigen Platte verpreßt. Die benötigten Preßzeiten können in einem weiten Bereich variieren und liegen im allgemeinen zwischen 15 Sekunden bis 30 Minuten.

Die zur Herstellung von mitteldichten Holzfaserplatten (MDF) aus den Bindemitteln benötigten Holzfasern geeigneter Qualität können aus rindenfreien Holzschnitzeln durch Zermahlung in Spezialmühlen oder sogenannten Refinern bei Temperaturen von ca. 180°C hergestellt werden.

Zur Beleimung werden die Holzfasern im allgemeinen mit einem Luftstrom aufgewirbelt und das Bindemittel in den so erzeugten Fasernstrom eingedüst ("Blow-Line" Verfahren). Das Verhältnis Holzfasern zu Bindemittel bezogen auf den Trockengehalt bzw. Feststoffgehalt beträgt üblicherweise 40:1 bis 3:1, bevorzugt 20:1 bis 4:1. Die beleimten Fasern werden in dem Fasernstrom bei Temperaturen von z.B. 130 bis 180°C getrocknet, zu einem Faservlies ausgestreut und bei Drücken von 20 bis 40 bar zu Platten oder Formkörpern verpreßt.

Die beleimten Holzfasern können auch, wie z.B. in DE-OS 2 417 243 beschrieben, zu einer transportablen Fasermatte verarbeitet werden. Dieses Halbzeug kann dann in einem zweiten, zeitlich und räumlich getrennten Schritt zu Platten oder Formteilen, wie z.B. Türinnenverkleidungen von Kraftfahrzeugen weiterverarbeitet werden.

Die erfindungsgemäßen Bindemittel eignen sich weiterhin zur Herstellung von Sperrholz- und Tischlerplatten nach den allgemein bekannten Herstellverfahren.

Auch andere Naturfaserstoffe wie Sisal, Jute, Hanf, Flachs, Kenaf, Kokosfasern, Bananenfasern und andere Naturfasern können mit den Bindemitteln zu Platten und Formkörpern verarbeitet werden. Die Naturfaserstoffe können auch in Mischung en mit Kunststoffasern, z.B. Polypropylen, Polyethylen, Polyester, Polyamide oder Polyacrylnitril verwendet werden. Diese Kunststoffasern können dabei auch als Cobindemittel neben dem erfindungsgemäßen Bindemittel fungieren. Der Anteil der Kunststoffasern beträgt dabei bevorzugt weniger als 50 Gew.-%, insbesondere weniger als 30 Gew.-% und ganz besonders bevorzugt weniger als 10 Gew.-%, bezogen auf alle Späne, Schnitzel oder Fasern. Die Verarbeitung der Fasern kann nach dem bei den Holzfaserplatten praktizierten Verfahren erfolgen. Es können aber auch vorgeformte Naturfasermatten mit den erfindungsgemäßen Bindemitteln imprägniert werden, gegebenenfalls unter Zusatz eines Benetzungshilfsmittels. Die imprägnierten Matten werden dann im bindemittelfeuchten oder vorgetrockneten Zustand z.B. bei Temperaturen zwischen 100 und 250°C und Drücken zwischen 10 und 100 bar zu Platten oder Formteilen verpreßt.

Die erfindungsgemäß erhaltenen Formkörper haben eine geringe Wasseraufnahme, eine niedrige Dickenquellung nach Wasserlagerung, eine gute Festigkeit und sind formaldehydfrei. Sie können unter anderem in der Automobilindustrie eingesetzt werden.

Eine weitere Anwendung der erfindungsgemäßen Bindemittel ist die Verwendung bei der Herstellung von Schleifmaterialien, insbesondere von Schleifpapieren, Schleifgeweben -vliesen oder Schleifkörpem, verwendet. Dabei kann es sich empfehlen, die wässrigen Polymerlösungen vor dem Auftragen auf das entsprechende Papier oder Gewebe oder den entsprechenden Körper durch Zugabe von verschiedenen anorganischen oder organischen Basen auf einen pH-Wert von 3 bis 8, insbesondere von 3 bis 5 einzustellen. Geeignete Basen sind u.a. Ammoniak, organische mono- oder polyfunktionelle Amine, Alkoholate sowie Metallalkylverbindungen, aber auch anorganische Basen wie zum Beispiel Natronlauge oder Soda.

Die auf diese Weise erhältlichen ebenfalls erfindungsgemäßen Schleifmaterialien weisen übliche Schleifgranulate auf, beispielsweise auf Basis von Korund, Quarz, Granat, Bimsstein, Tripel, Siliciumcarbid, Schmirgel, Aluminiumoxide, Zirkonoxide, Kieselgur, Sand, Gips, Borcarbid, Boride, Carbide, Nitride, Ceriumoxid oder Silikate.

Die erfindungsgemäßen Schleifmaterialien können u.a. dadurch hergestellt werden, dass man zunächst auf das entsprechende Papier, Gewebe oder den entsprechenden Körper die wässrige Polymerlösung, gegebenenfalls modifiziert mit z. B. Dispersionen, aufbringt, danach die gewählten Schleifgranulate hinzufügt und schließlich noch weitere Mengen der wässrigen Polymerlösung, gegebenenfalls modifiziert mit z. B. Dispersionen als sogenannten Deckbinder hinzufügt.

Die erfindungsgemäße Verwendung der wässrigen Polymerlösung führt zu verbesserten Schleifmaterialien, die sich u.a. durch eine hohe Flexibilität, Zähelastizität, Reißkraft und Reißdehnung auszeichnen, über ein günstiges Abriebverhalten verfügen und in welchen das Schleifgranulat gut eingebunden ist.

Eine weitere erfindungsgemäße Verwendung der Bindemittel ist die Verwendung für die Herstellung von Filtermaterialien, insbesondere von Filterpapieren oder Filtergeweben. Gewebematerialien können beispielsweise sein Cellulose, Baumwolle, Polyester, Polyamid, PE, PP, Glasvliese, Glaswolle. Dabei kann es sich empfehlen, die wässrigen Polymerlösungen vor dem Auftragen auf das entsprechende Papier oder Gewebe durch Zugabe von verschiedenen anorganischen oder organischen Basen auf einen pH-Wert von 2 bis 8, insbesondere von 3,0 bis 6,5 einzustellen. Geeignete Basen sind u.a. Triethanolamin, Diethanolamin, Monoethanolamin, Hydroxyalkylamine, Ammoniak, organische mono- oder polyfunktionelle Amine, Alkoholate sowie Metallalkylverbindungen, aber auch anorganische Basen wie zum Beispiel Natronlauge oder Kaliumhydroxid. Durch das Einstellen des pH-Wertes auf den angegebenen Wertebereich wird u.a. das Abfallen der Berstfestigkeit nach Lagerung oder thermischer Belastung reduziert und somit eine hohe Wärmestandfestigkeit erreicht.

Das Auftragen der erfindungsgemäß zu verwendenden Polymerlösung auf die Filtermaterialien, also u.a. auf Filterpapier oder Filtergewebe erfolgt vorzugsweise nach dem sogenannten Tränkverfahren oder durch Aufsprühen. Dabei werden die wässrigen Polymerlösungen durch Beleimen auf die Filtermaterialien aufgebracht. Es empfiehlt sich, nach dem Beleimen der Filtermaterialien mit den wässrigen Polymerlösungen diese noch 0,1 bis 60 Minuten lang, insbesondere 1 bis 60 Minuten lang bei Temperaturen von 100 bis 250°C, insbesondere von 110 bis 220°C zu tempern, d.h. zu härten.

Die erfindungsgemäße Verwendung der wäßrigen Polymerlösung als Bindemittel für Filtermaterialien hat zur Folge, dass die behandelten Filtermaterialien u.a. eine erhöhte mechanische Stabilität aufweisen (höhere Reissfestigkeit und Berstfestigkeit), insbesondere nach Lagerung im Feuchtklima und bei erhöhter Temperatur. Weiterhin bewirkt die erfindungsgemäße Verwendung der wässrigen Bindemittel, dass die erhaltenen Filtermaterialien u.a. durch eine hohe chemische Resistenz, beispielsweise gegenüber Lösungsmitteln, gekennzeichnet sind, ohne dass dabei die Durchlässigkeit (Porengröße) des Filtermaterials beeinflußt wird. Durch die Verwendung der wässrigen Polymerlösungen beobachtet man auch, dass diese den Filtermaterialien bereits nach der Trocknung eine hohe Festigkeit verleihen (Trockenreissfestigkeit), wobei sich aber die Filtermaterialien auch nach der Trocknung unterhalb der Härtungstemperatur der wässrigen Polymerlösungen noch gut einer Verformung durch Falten, Rillieren oder Plissieren unterziehen lassen. Nach der anschließenden thermischen Aushärtung (Tempern) verleihen die Polymerlösungen den dadurch erhaltenen ebenfalls erfindungsgemäßen Filtermaterialien, im wesentlichen Filterpapiere oder Filtergewebe, eine hohe Formstabilität. Diese Eigenschaft ermöglicht die Herstellung von Halbzeugen und damit die Auftrennung des Herstellungsprozesses in einzelne voneinander entkoppelte Produktionsschritte.

Eine weitere erfindungsgemäße Verwendung ist die Verwendung der wässrigen Polymerlösungen als Bindemittel für Kork, -vliese, matten oder-platten.

Die nachfolgenden Beispiele sollen die Erfindung näher erläutern, ohne sie jedoch darauf zu beschränken:

### Beispiele

### Herstellvorschriften allgemein:

a) in-situ:
   Die Polymere mit breiter Molekulargewichtsverteilung können in-situ in einem Schritt hergestellt werden, indem zuerst der niedermolekulare Anteil synthetisiert wird (bei bestimmter Initiatorkonzentration/Temperatur) und nach 0-100%) Zugabe der Monomeren, die Initiatorkonzentration in der Reaktionsmischung abgesenkt und/oder die Temperatur reduziert wird (stufenweise oder kontinuierlich); oder die multimodalen Polymere können in-situ in einem Schritt hergestellt werden, indem zuerst der hochmolekulare Anteil synthetisiert wird (bei bestimmter Initiatorkonzentration/Temperatur) und nach 100-0 % Zugabe der Monomeren, die Initiatorkonzentration in der Reaktionsmischung erhöht und/oder die Temperatur erhöht wird.
b) Mischung:
   Die Polymere mit breiter Molekulargewichtsverteilung können durch Mischen von Polymeren mit unterschiedlichen Molekulargewichten hergestel It werden.
c) Polymerisation einer Komponente in Gegenwart der anderen
   Die Polymere mit breiter Molekulargewichtsverteilung können durch Synthese eines Polymeren mit niedrigem bzw. hohem Molekulargewichts in Anwesenheit eines 2. Polymeren mit hohem bzw. niedrigem Molekulargewicht hergestellt werden.

### Analyse- und Prüfmethoden

### Gelpermeationschromatographie

Es wurde eine Kombination aus 4 Trennsäulen (innerer Durchmesser jeweils 7.8 mm Länge jeweils 30 cm, Säulentemperatur jeweils 35°C) mit folgenden Trennmaterialien verwendet:

| Säule-Nr. | Trennmaterial | Ausschlußgrenze Polyethylenoxid |
|---|---|---|
| 1 | TSK G5000 PW xl | 4.000 - 1.000.000 |
| 2 | Waters Ultrahydrogel 1.000 | 1.000.000 |
| 3 | Waters Ultrahydrogel 500 | 400.000 |
| 4 | Waters Ultrahydrogel 500 | 400.000 |

Als Elutionsmittel wurde 0.008 m TRIS-Puffer (Tris-(hydroxymethyl)aminomethan, Merck, Darmstadt) bei pH: 7 in destilliertem Wasser unter Zusatz von 0.15 mol/L NaCl und 0.01 mol/L NaN₃ eingesetzt.

Es wurden jeweils 400 µL der Probenlösung injiziert.

Die Durchflussgeschwindigkeit betrug 0.5 mL/min. Die Bodenzahl der Trennsäulen-Kombination bei dieser Durchflussgeschwindigkeit betrug 37.000.

Als Detektor wurde ein Differentialrefraktometer ERC 7510 der Fa. ER MA verwendet.

Die Auswertung wurde nach einem Durchflussvolumen von 39.6 mL (M(Na-PAA) ca. 642) abgebrochen (Integrationsgrenze). Die Integration der erhaltenen Chromatogramme erfolgte in Anlehnung an DIN 55672-1 mit einer Genauigkeit von ± 3%.

### Dynamisch-mechanische Messungen:

Die Messungen des Speichermoduls G' erfolgten mit einem deformationsgesteuerten modularen Rheometersystem der Firma Rheometrics Inc., Typ ARES. Dabei wurde ein Kraftaufnehmer vom Typ 2K FRTN1 verwendet. Messanordnung: Parallel-Platte-Geometrie, Plattendurchmesser: 25 mm, Probendicke ca. 1 mm. Das Speichermodul G' wurde in Abhängigkeit von der Temperatur gemessen, dabei betrug die Messfrequenz 1 Hz und die Heizrate: 1 °C/min.

### Anwendungstechnische Prüfungen:

Formulierung des Bindemittels:
   jeweils 1% (bez. Feststoff) Silquest A-1100
Rohvlies:
   Glasvlies ca. 50 g/m²
Verfestigung:
   Die Rohvliese von 32 cm Länge und 28 cm Breite werden in Längsrichtung über ein Endlos-PES-Siebband zunächst durch eine 20%-ige Bindemittelflotte und anschließend über eine Absaugvorrichtung geführt. Die Bandgeschwindigkeit beträgt 0,6 m/min. Über die verstellbare Stärke der Absaugung erfolgt die Dosierung des Nassauftrages. Im Falle eines Nassauftrages von ca. 100% erhält man mit einer Flottenkonzentration des Bindemittels von 20% einen Trockenauftrag von 20%+-2%.
   Die Aushärtung der imprägnierten Vliese erfolgt für 2 Minuten bei 200°C auf einem PES-Store als Träger in einem Mathis-Trockner (Heißluft ist auf maximal gestellt).
Vorbereitung der Prüflinge:
   Aus dem Vlies werden jeweils 5 Prüflinge für die Prüfung der Reißkraft und 6 Prüflinge für die Prüfung der Biegesteifigkeit in Längsrichtung ausgeschnitten. Die Größe der Vliese beträgt für
   - die Reißfestigkeit bei 23°C ohne weitere Behandlung ("Reißfestigkeit, RT") 240 x 50mm
   - die Reißfestigkeit nach Lagerung für 15 min in 80°C warmem Wasser ("Reißfestigkeit, nass") 240 x 50mm
   - die Prüfung der Biegesteifigkeit 70x30mm.

### Prüfungen:

a) Reißfestigkeiten: Die Angabe der gemittelten Prüfwerte erfolgt in N/5cm, die Einspannlänge beträgt für die Prüfung der Reißfestigkeit "trocken" und "nass" 200mm. Die Abzugsgeschwindigkeit wird auf 25 mm/min eingestellt. Die Reißfestigkeiten werden gewichtskorrigiert auf 60g/m² (Berechnungsformel: Fₘₐₓ * 60 [g/m²] / "Ist Gewicht" [g/m²]).
b) Biegesteifigkeit: Der Prüfstreifen wird in einer Klemmvorrichtung befestigt und in einem Abstand von 10 mm über eine Halterung in einem Winkel von 20° gebogen. Die Höhe des Prüfstreifens beträgt 30 mm. Die gemessene Kraft stellt die Biegesteifigkeit dar. Insgesamt werden 6 Prüflinge jeweils von der Vorder- und Rückseite vermessen und ein Mittelwert bestimmt.

**Beispiele:**

| **Beispiel M_{w} PD [g/mol]** | | | **Zusammensetzung Bindemittel** | |
|---|---|---|---|---|
| | | | Zusammensetzung | Sonstiges (bez. Polymer) |
| V 1 (Vergleichsbeispiel 1) | 77000 | 11.7 | AS/MS 75:25 wt%, FG: 46% + 30wt% TEA bez. Polymer | |
| V 2 (Vergleichsbeispiel 2) | 11800 | 3.4 | AS/MS 70:30 wt%, FG: 46% + 30wt% TEA bez. Polymer | |
| Polymer A | 3500 | 2.6 | AS/MS 50:50 wt%, FG: 50% + 50wt% TEA bez. Polymer | |
| Polymer B | 3500 | 2.6 | AS/MS 50:50 wt%, FG: 50% + 30 wt% TEA bez. Polymer | |
| Beispiel 1.1 | 22700 | 12.8 | Mischung V1:Polymer A 25:75 wt% | |
| Beispiel 1.2 | 34700 | 15.8 | Mischung V1:Polymer A 50:50 wt% | |
| Beispiel 1.2a | 34700 | 15.8 | Mischung V1:Polymer A 50:50 wt% | 1 wt% hypophosphorige Säure |
| Beispiel 1.3 | 46800 | 16.1 | Mischung V1:Polymer A 75:25 wt% | |
| Beispiel 1.4 | 22800 | 9.1 | Mischung V1:V2 25:75 wt% | |
| Beispiel 1.5 | 38200 | 10.9 | Mischung V1:V2 50:50 wt% | |
| Beispiel 1.6 | 52000 | 12.4 | Mischung V1:V2 75:25 wt% | |
| Beispiel 1.7 | 22700 | 12.8 | Mischung V1:Polymer B 25:75 wt% | |
| Beispiel 1.8 | 33100 | 8.9 | AS/MS 70:30 wt%, FG: 51% + 30wt% TEA bez. Polymer | |
| Beispiel 2.1 | 6000 | 3.8 | Mischung V2:Polymer A 25:75 wt% | |
| Beispiel 2.2 | 8200 | 4.4 | Mischung V2:Polymer A 50:50 wt% | |
| Beispiel 2.2a | 8200 | 4.4 | Mischung V2:Polymer A 50:50 wt% | 1 wt% hypophosphorige Säure |
| Beispiel 2.3 | 10000 | 4.8 | Mischung V2:Polymer A 75:25 wt% | |
| Beispiel 2.4 | 7100 | 8.1 | AS/MS 50:50 wt%, FG: 53% + 30wt% TEA bez. Polymer | |

| | | | | |
|---|---|---|---|---|
| AS: Acrylsäure, MS: Maleinsäure, TEA: Triethanolamin M_{w}: Gewichtsmittel des Molekulargewichts, PD: Polydispersität (M_{w}/Mₙ), FG: Feststoffgehalt alle Beispiele liegen in Form von wässrigen Lösungen vor | | | | |

### Beispiel 1.8:

In einem Druckreaktor mit Rührer, Stickstoffzuführung und Dosiervorrichtung wurden 1275 g destilliertes Wasser, 560 g Maleinsäureanhydrid, 4.6 mg Eisensulfat-Heptahydrat vorgelegt, 3 mal mit Stickstoff abgepresst und anschließend auf 100°C Innentemperatur erhitzt. Dann wurden in zwei getrennten Zuläufen in 5 h ein Gemisch aus 1547 g Acrylsäure und 473 g destilliertem Wasser und in 6 h 516 g 30%ige Wasserstoffperoxid-Lösung (s. Dosierprogramm) zugegeben.

Temperaturprogramm (Beginn mit Start der Zuläufe):
1 h bei 100°C, innerhalb von 4 h auf 130°C aufheizen, 3 h bei 130°C

Wasserstoffperoxid-Zulauf:
1. h: 21 g, 2. h: 30 g, 3. h: 51 g, 4. h: 89 g, 5. h: 137 g, 6. h: 185 g

Es wurde eine gelbliche, klare Lösung mit einem K-Wert (5%ig in Wasser) von 19.4 und einem mittleren Molekulargewicht M_{w} 33100 g/mol, PD: 8.9 erhalten (Feststoffgehalt der Lösung: 50.5 Gew.-%).

Anschließend wurde das Produkt mit 30% Triethanolamin bezüglich Feststoffgehalt abgemischt.

### Beispiel 2.4:

In einem Druckreaktor mit Rührer, Stickstoffzuführung und Dosiervorrichtung wurden 855 g destilliertes Wasser, 923 g Maleinsäureanhydrid, 4.6 mg Eisensulfat-Heptahydrat vorgelegt, 3 mal mit Stickstoff abgepresst und anschließend auf 130°C Innentemperatur erhitzt. Dann wurden in zwei getrennten Zuläufen in 5 h ein Gemisch aus 1118 g Acrylsäure und 789 g destilliertem Wasser und in 6 h 516 g 30%ige Wasserstoffperoxid-Lösung (s. Dosierprogramm) zugegeben.

Temperaturprogramm (Beginn mit Start der Zuläufe):
1 h bei 130°C, innerhalb von 4 h auf 100°C abkühlen, 3 h bei 100°C

Wasserstoffperoxid-Zulauf:
1. h: 182 g, 2. h: 137 g, 3. h: 86 g, 4. h: 50 g, 5. h: 30 g, 6. h: 20.5 g

Es wurde eine gelbliche, klare Lösung mit einem K-Wert (5%ig in Wasser) von 12.0 und einem mittleren Molekulargewicht M_{w} 7100 g/mol, PD: 8.1 erhalten (Feststoffgehalt der Lösung: 52.2 Gew.-%).

Anschließend wurde das Produkt mit 30% Triethanolamin bezüglich Feststoffgehalt abgemischt.

**Tabelle 1:**

| Beispiel | Mw [g/mol] | PD | Reisskraft, RT [N/5cm] | Reisskraft, nass [N/5cm] | Biegesteifigkeit [mN] | G' (50°C)/G'ₘᵢₙ | Zunahme Fließfähigkeit in % | Temperatur bei G'ₘᵢₙ [°C] |
|---|---|---|---|---|---|---|---|---|
| V1 | 77000 | 11.7 | 148 | 136 | 240 | 2 | =100 | 100 |
| Beispiel 1.1 | 22700 | 12.8 | 143 | 137 | 235 | 50 | 2500 | 115 |
| Beispiel 1.2 | 34700 | 15.8 | 153 | 145 | 244 | 8 | 400 | 95 |
| Beispiel 1.2a | 34700 | 15.8 | 152 | 143 | 240 | 7 | 350 | 95 |
| Beispiel 1.3 | 46800 | 16.1 | 152 | 145 | 327 | 3 | 150 | 100 |
| Beispiel 1.4 | 22800 | 9.1 | 153 | 138 | 241 | 6 | 300 | 100 |
| Beispiel 1.5 | 38200 | 10.9 | 149 | 138 | 281 | 5 | 250 | 95 |
| Beispiel 1.6 | 52000 | 12.4 | 155 | 149 | 286 | 3 | 150 | 95 |
| Beispiel 1.7 | 22700 | 12.8 | 148 | 137 | 268 | 8 | 400 | 100 |
| Beispiel 1.8 | 33100 | 8.9 | 149 | 138 | 245 | 3 | 150 | 95 |

| | | | | | | | | |
|---|---|---|---|---|---|---|---|---|
| M_{w}: Gewichtsmittel des Molekulargewichts, PD: Polydispersität (M_{w}/Mₙ) G': Speichermodul, G'ₘᵢₙ: Speichermodul beim Minimum des Kurvenverlaufs | | | | | | | | |

**Tabelle 2:**

| Beispiel | Mw [g/mol] | PD | Reisskraft, RT [N/5cm] | Reisskraft, 180°C [N/5cm] | Reisskraft, nass [N/5cm] | G' (50°C)/G'ₘᵢₙ | Zunahme *Fließfähigkeit* in % | Temperatur bei G'ₘᵢₙ [°C] |
|---|---|---|---|---|---|---|---|---|
| V2 | 11800 | 3.4 | 144 | 115 | 141 | 5 | =100 | 100 |
| Beispiel 2.1 | 6000 | 3.8 | 145 | 116 | 131 | 5500 | 1000 | 110 |
| Beispiel 2.2 | 8200 | 4.4 | 149 | 122 | 142 | 820 | 400 | 110 |
| Beispiel 2.2a | 8200 | 4.4 | 147 | 120 | 141 | 720 | 400 | 110 |
| Beispiel 2.3 | 10000 | 4.8 | 151 | 117 | 143 | 3n.b. | n.b. | n.b. |
| Beispiel 2.4 | 7100 | 8.1 | 145 | 117 | n.b. | 20 | 400 | 110 |

| | | | | | | | | |
|---|---|---|---|---|---|---|---|---|
| M_{w}: Gewichtsmittel des Molekulargewichts, PD: Polydispersität (M_{w}/Mₙ) G': Speichermodul, G'ₘᵢₙ: Speichermodul beim Minimum des Kurvenverlauf | | | | | | | | |

## Patentansprüche

1. Verwendung von formaldehydfreien, wässrigen Bindemitteln mit breiter Molekulargewichtsverteilung, enthaltend Polymerisate, aufgebaut aus Monomeren A) und B), mit
(A) 5 bis 50 Gew.-% eines ethylenisch ungesättigten Säureanhydrids oder einer ethylenisch ungesättigten Dicarbonsäure, deren Carbonsäuregruppen eine Anhydridgruppe bilden können, oder Gemischen davon [Monomere A)],
(B) 50 bis 95 Gew.-% einer ethylenisch ungesättigten Verbindung [Monomere B)] unterschliedlich von A sowie
(C) mindestens einen polyfunktionellen Vernetzer oder Gemische davon,
wobei die durch radikalische Polymerisation erhaltenen Polymerisate aus A) und B) bei Einordnung in ein Koordinatensystem über ihr mittleres Molekulargewicht Mw und ihre Polydispersitätswerte, in der Fläche oberhalb einer Gerade liegen, die über die Geradengleichung y= 1,25x + 20000 definiert ist und in y-Richtung parallel um mindestens + 3000 verschoben wurde, wobei die x-Achse das Gewichtsmittel des Molekulargewichtes und die y-Achse die Polydispersität mal 10000 bezeichnet.

2. Verwendung von formaldehydfreien, wässrigen Bindemitteln gemäß Anspruch 1, **dadurch gekennzeichnet, dass** die Polymerisate aus A) und B) eine breite Molekulargewichtsverteilung aufweisen.

3. Verwendung von formaldehydfreien, wässrigen Bindemitteln gemäß einem der Ansprüche 1 oder 2, wobei das wässrige Bindemittel weniger als 1,5 Gew.-% bezogen auf die Summe von A), B) und C), eines Phosphor enthaltenden Reaktionsbeschleunigers enthält.

4. Verwendung von formaldehydfreien, wässrigen Bindemitteln gemäß einem der Ansprüche 1 bis 3, **dadurch gekennzeichnet, dass** das Polymerisat aus A) und B) 5 bis 50 Gew.-% Maleinsäure enthält.

5. Verwendung von formaldehydfreien, wässrigen Bindemitteln gemäß Anspruch 4, **dadurch gekennzeichnet, dass** das Polymerisat aus A) und B) Acrylsäure und Maleinsäure enthält.

6. Verwendung von formaldehydfreien, wässrigen Bindemitteln gemäß einem der Ansprüche 1 bis 5, **dadurch gekennzeichnet, dass** das unter C) aufgeführte AIkanolamin eine Verbindung der allgemeinen Formel I, 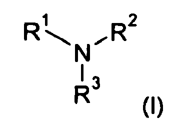 wobei R1 Wasserstoff, eine C₁-C₁₀-Alkylgruppe oder eine C₁-C₁₀-hydroxyalkylgruppe bedeutet und R2 und R3 für eine C₁-C₁₀Hydroxyalkylgruppe stehen.

7. Verwendung von formaldehydfreien, wässrigen Bindemitteln gemäß einem der der Ansprüche 1 bis 6, **dadurch gekennzeichnet, dass** das unter C) aufgeführte Alkanolamin Triethanolamin ist.

8. Verwendung von formaldehydfreien, wässrigen Bindemitteln gemäß einem der Ansprüche 1 bis 7, als Bindemittel für Fasern, -matten und -vliese.

9. Verwendung von formaldehydfreien, wässrigen Bindemitteln gemäß einem der Ansprüche 1 bis 7, als Bindemittel für Glasfasern, -vliese, -matten, Mineralfasern, -vliese und -matten.

10. Verfahren zur Herstellung von gebundenen Faservliesen, **dadurch gekennzeichnet, dass** Faservliese mit einem wässrigen Bindemittel gemäß einem der Ansprüche 1 bis 7 beschichtet, besprüht oder getränkt und anschliessend getrocknet werden.

11. Verfahren gemäß Anspruch 10 zur Herstellung von gebundenen Glasfaservliesen oder -matten.

12. Gebundene Faservliese oder -matten, erhältlich durch Verwendung eines formaldehydfreien, wässrigen Bindemittels gemäß einem der Ansprüche 1 bis 7.

13. Gebundene Glasfaservliese oder -matten, erhältlich durch Verwendung eines formaldehydfreien, wässrigen Bindemittels gemäß einem der Ansprüche 1 bis 7.

14. Dachbahnen enthaltend gebundene Faservliese oder -matten gemäß Anspruch 12.

15. Dachbahnen enthaltend gebundene Glasfaservliese oder -matten gemäß Anspruch 13.

16. Dämmaterialien enthaltend gebundene Faservliese oder -matten gemäß Anspruch 12.

17. Fußbodenbeläge enthaltend gebundene Faservliese oder -matten gemäß Anspruch 12.

18. Dämmaterialien enthaltend gebundene Glasfaservliese oder -matten gemäß Anspruch 13.

19. Fußbodenbeläge enthaltend gebundene Glasfaservliese oder -matten gemäß Anspruch 13.

20. Verwendung von formaldehydfreien, wässrigen Bindemitteln gemäß einem der Ansprüche 1 bis 7, als Bindemittel für Fasern, Schnitzel oder Späne zur Herstellung von Formkörpern.

21. Verwendung gemäß Anspruch 20, **dadurch gekennzeichnet, dass** die Fasern, Schnitzel oder Späne aus nachwachsenden Rohstoffen bestehen.

22. Verwendung gemäß einem der Ansprüche 20 oder 21, **dadurch gekennzeichnet, dass** es sich bei den Fasern um natürliche oder synthetische Fasern oder deren Mischungen handelt.

23. Verwendung gemäß einem der Ansprüche 20 bis 22, **dadurch gekennzeichnet, dass** es sich um Holzfasern, Holzspäne, Jute, Sisal, Flachs, Hanf oder Kenaf handelt.

24. Verwendung gemäß einem der Ansprüche 20 bis 23, **dadurch gekennzeichnet, dass** es sich um Holzspanplatten handelt.

25. Verwendung von formaldehydfreien, wässrigen Bindemitteln gemäß einem der Ansprüche 1 bis 7, als Bindemittel für Filtermaterialien.

26. Verwendung von formaldehydfreien, wässrigen Bindemitteln gemäß einem der Ansprüche 1 bis 7, als Bindemittel für Schleifmittel.

27. Verwendung von formaldehydfreien, wässrigen Bindemitteln gemäß einem der Ansprüche 1 bis 7, als Bindemittel für Kork.

28. Formaldehydfreie, wässrige Bindemittel für Substrate mit breiter Molekulargewichtsverteilung, enthaltend Polymerisate, aufgebaut aus Monomeren A) und B), mit
(A) 5 bis 50 Gew.-% eines ethylenisch ungesättigten Säureanhydrids oder einer ethylenisch ungesättigten Dicarbonsäure, deren Carbonsäuregruppen eine Anhydridgruppe bilden können, oder Gemischen davon [Monomere A)],
(B) 50 bis 95 Gew.-% einer ethylenisch ungesättigten Verbindung [Monomere B)] unterschiedlich von A sowie
(C) mindestens einen polyfunktionellen Vernetzer oder Gemische davon,
wobei die durch radikalische Polymerisation erhaltenen Polymerisate aus A) und B) bei Einordnung in ein Koordinatensystem über ihr mittleres Molekulargewicht Mw und ihre Polydispersitätswerte, in der Fläche oberhalb einer Gerade liegen, die über die Geradengleichung y= 1,25x + 20000 definiert ist und in y-Richtung parallel um mindestens + 3000 verschoben wurde, wobei die x-Achse das Gewichtsmittel des Molekulargewichtes und die y-Achse die Polydispersität mal 10000 bezeichnet.

## Claims

1. The use of formaldehyde-free aqueous binders having a broad molecular weight distribution and comprising polymers composed of monomers A) and B), comprising
(A) from 5 to 50% by weight of an ethylenically unsaturated acid anhydride or ethylenically unsaturated dicarboxylic acid whose carboxylic acid groups can form an anhydride group, or mixtures thereof [monomers A)],
(B) from 50 to 95% by weight of an ethylenically unsaturated compound [monomers B)] different from A, and
(C) at least one polyfunctional crosslinker or mixtures thereof,
the polymers of A) and B) obtained by free-radical addition polymerization, when classified in a coordinate system by way of their average molecular weight Mw and their polydispersity, being situated in the area above a straight line which is defined by the linear equation y = 1.25x + 20 000 and has been shifted in y direction parallelwise by at least +3000, the x axis denoting the weight-average molecular weight and the y axis the polydispersity times 10 000.

2. The use of formaldehyde-free aqueous binders according to claim 1, wherein the polymers of A) and B) have a broad molecular weight distribution.

3. The use of formaldehyde-free aqueous binders according to any one of claims 1 and 2, wherein the aqueous binder comprises less than 1.5% by weight, based on the sum of A), B) and C), of a phosphorus-comprising reaction accelerant.

4. The use of formaldehyde-free aqueous binders according to any one of claims 1 to 3, wherein the polymer of A) and B) comprises from 5 to 50% by weight of maleic acid.

5. The use of formaldehyde-free aqueous binders according to claim 4, wherein the polymer of A) and B) comprises acrylic acid and maleic acid.

6. The use of formaldehyde-free aqueous binders according to any one of claims 1 to 5, wherein the alkanolamine listed under C) is a compound of the formula I 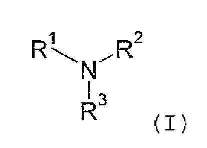 where R¹ is hydrogen, C₁-C₁₀ alkyl or C₁-C₁₀ hydroxyalkyl and R² and R³ are each C₁-C₁₀ hydroxyalkyl.

7. The use of formaldehyde-free aqueous binders according to any one of claims 1 to 6, wherein the alkanolamine listed under C) is triethanolamine.

8. The use of formaldehyde-free aqueous binders according to any one of claims 1 to 7 as binders for fibers, fiber mats and fiber webs.

9. The use of formaldehyde-free aqueous binders according to any one of claims 1 to 7 as binders for glass fibers, glass fiber webs, glass fiber mats, mineral fibers, mineral fiber webs and mineral fiber mats.

10. A process for producing bonded fiber webs, which comprises coating, spraying or impregnating fiber webs with an aqueous binder according to any one of claims 1 to 7 and subsequently drying them.

11. The process according to claim 10 for producing bonded glass fiber webs or mats.

12. Bonded fiber webs or mats obtainable by using a formaldehyde-free aqueous binder according to any one of claims 1 to 7.

13. Bonded glass fiber webs or mats obtainable by using a formaldehyde-free aqueous binder according to any one of claims 1 to 7.

14. Roofing membranes comprising bonded fiber webs or mats according to claim 12.

15. Roofing membranes comprising bonded glass fiber webs or mats according to claim 13.

16. Insulating materials comprising bonded fiber webs or mats according to claim 12.

17. Floor coverings comprising bonded fiber webs or mats according to claim 12.

18. Insulating materials comprising bonded glass fiber webs or mats according to claim 13.

19. Floor coverings comprising bonded glass fiber webs or mats according to claim 13.

20. The use of formaldehyde-free aqueous binders according to any one of claims 1 to 7 as binders for fibers, chips or shavings for producing moldings.

21. The use according to claim 20, wherein the fibers, chips or shavings are composed of renewable raw materials.

22. The use according to any one of claims 20 and 21, wherein the fibers are natural or synthetic fibers or mixtures thereof.

23. The use according to any one of claims 20 to 22, wherein the substrates are wood fibers, wood chips, jute, sisal, flax, hemp or kenaf.

24. The use according to any one of claims 20 to 23, wherein the substrates are wood chipboard panels.

25. The use of formaldehyde-free aqueous binders according to any one of claims 1 to 7 as binders for filter materials.

26. The use of formaldehyde-free aqueous binders according to any one of claims 1 to 7 as binders for abrasives.

27. The use of formaldehyde-free aqueous binders according to any one of claims 1 to 7 as binders for cork.

28. Formaldehyde-free aqueous binders for substrates, having a broad molecular weight distribution and comprising polymers composed of monomers A) and B), comprising
(A) from 5 to 50% by weight of an ethylenically unsaturated acid anhydride or ethylenically unsaturated dicarboxylic acid whose carboxylic acid groups can form an anhydride group, or mixtures thereof [monomers A)],
(B) from 50 to 95% by weight of an ethylenically unsaturated compound [monomers B)] different from A, and
(C) at least one polyfunctional crosslinker or mixtures thereof,
the polymers of A) and B) obtained by free-radical addition polymerization, when classified in a coordinate system by way of their average molecular weight Mw and their polydispersity, being situated in the area above a straight line which is defined by the linear equation y = 1.25x + 20 000 and has been shifted in y direction parallelwise by at least +3000, the x axis denoting the weight-average molecular weight and the y axis the polydispersity times 10 000.

## Revendications

1. Utilisation de liants aqueux, exempts de formaldéhyde, ayant une large répartition de poids moléculaire, contenant des polymères, constitués de monomères A) et B), avec :
(A) 5 à 50 % en poids d'un anhydride d'acide éthyléniquement insaturé ou d'un acide dicarboxylique éthyléniquement insaturé, dont les groupes acide carboxylique peuvent former un groupe anhydride, ou des mélanges de ceux-ci [monomères A)],
(B) 50 à 95 % en poids d'un composé éthyléniquement insaturé [monomères B)] différent de A), ainsi que
(C) au moins un réticulant polyfonctionnel ou des mélanges de ceux-ci,
les polymères obtenus par polymérisation par voie radicalaire à partir de A) et B) se situant dans la surface se trouvant au-dessus d'une droite, dans le cas d'un classement dans un système de coordonnées selon leur poids moléculaire moyen Mw et leurs valeurs de polydispersion, qui est définie par l'équation de droite y = 1,25x + 20 000 et a été déplacée d'au moins +3000 parallèlement dans la direction y, l'axe des x désignant la moyenne pondérée du poids moléculaire et l'axe des y désignant la polydispersion fois 10 000.

2. Utilisation de liants aqueux, exempts de formaldéhyde, selon la revendication 1, **caractérisée en ce que** les polymères issus de A) et B) présentent une large répartition de poids moléculaire.

3. Utilisation de liants aqueux, exempts de formaldéhyde, selon l'une des revendications 1 ou 2, dans laquelle le liant aqueux contient moins de 1,5 % en poids, par rapport à la somme de A), B) et C), d'un accélérateur de réaction contenant du phosphore.

4. Utilisation de liants aqueux, exempts de formaldéhyde, selon l'une quelconque des revendications 1 à 3, **caractérisée en ce que** le polymère issu de A) et B) contient 5 à 50 % en poids d'acide maléique.

5. Utilisation de liants aqueux, exempts de formaldéhyde, selon la revendication 4, **caractérisée en ce que** le polymère issu de A) et B) contient de l'acide acrylique et de l'acide maléique.

6. Utilisation de liants aqueux, exempts de formaldéhyde, selon l'une quelconque des revendications 1 à 5, **caractérisée en ce que** l'alcanolamine mentionnée pour C) est un composé de formule générale I, 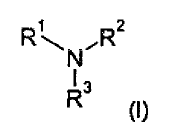 dans laquelle R¹ signifie hydrogène, un groupe alkyle en C₁-C₁₀ ou un groupe hydroxyalkyle en C₁-C₁₀ et R² et R³ représentent un groupe hydroxyalkyle en C₁-C₁₀.

7. Utilisation de liants aqueux, exempts de formaldéhyde, selon l'une quelconque des revendications 1 à 6, **caractérisée en ce que** l'alcanolamine mentionnée pour C) est de la triéthanolamine.

8. Utilisation de liants aqueux, exempts de formaldéhyde, selon l'une quelconque des revendications 1 à 7, en tant que liants pour des fibres, des mats de fibres et des nappes de fibres.

9. Utilisation de liants aqueux, exempts de formaldéhyde, selon l'une quelconque des revendications 1 à 7, en tant que liants pour des fibres de verre, des nappes de fibres de verre, des mats de fibres de verre, des fibres minérales, des nappes de fibres minérales et des mats de fibres minérales.

10. Procédé pour la fabrication de nappes de fibres liées, **caractérisé en ce que** des nappes de fibres comportant un liant aqueux selon une des revendications 1 à 7 sont recouvertes, aspergées ou trempées et ensuite séchées.

11. Procédé selon la revendication 10 pour la fabrication de nappes de fibres de verre ou de mats de fibres de verre, liés.

12. Nappes de fibres ou mats de fibres, liés, que l'on peut obtenir grâce à l'utilisation d'un liant aqueux, exempt de formaldéhyde, selon l'une quelconque des revendications 1 à 7.

13. Nappes de fibres de verre ou mats de fibres de verre, liés, que l'on peut obtenir grâce à l'utilisation d'un liant aqueux, exempt de formaldéhyde, selon l'une quelconque des revendications 1 à 7.

14. Lés de toit contenant des nappes de fibres ou des mats de fibres, liés, selon la revendication 12.

15. Lés de toit contenant des nappes de fibres de verre ou des mats de fibres de verre, liés, selon la revendication 13.

16. Matériaux d'isolation contenant des nappes de fibres ou des mats de fibre, liés, selon la revendication 12.

17. Revêtements de plancher contenant des nappes de fibres ou des mats de fibres, liés, selon la revendication 12.

18. Matériaux d'isolation contenant des nappes de fibres de verre ou des mats de fibres de verre, liés, selon la revendication 13.

19. Revêtements de plancher contenant des nappes de fibres de verre ou des mats de fibres de verre, liés, selon la revendication 13.

20. Utilisation de liants aqueux, exempts de formaldéhyde, selon l'une quelconque des revendications 1 à 7, en tant que liants pour des fibres, des râpures ou des copeaux lors de la fabrication de corps moulés.

21. Utilisation selon la revendication 20, **caractérisée en ce que** les fibres, râpures ou copeaux sont constitués de matières premières à dilatation secondaire.

22. Utilisation selon l'une quelconque des revendications 20 ou 21, **caractérisée en ce que** les fibres sont des fibres naturelles ou synthétiques ou leurs mélanges.

23. Utilisation selon l'une quelconque des revendications 20 à 22, **caractérisée en ce qu'**il s'agit de fibre de bois, de copeaux de bois, de jute, de sisal, de lin, de chanvre ou de kénaf.

24. Utilisation selon l'une quelconque des revendications 20 à 23, **caractérisée en ce qu'**il s'agit de panneaux de particules.

25. Utilisation de liants aqueux, exempts de formaldéhyde, selon l'une quelconque des revendications 1 à 7, en tant que liants pour des matériaux de filtrage.

26. Utilisation de liants aqueux, exempts de formaldéhyde, selon l'une quelconque des revendications 1 à 7, en tant que liants pour des abrasifs.

27. Utilisation de liants aqueux, exempts de formaldéhyde, selon l'une quelconque des revendications 1 à 7, en tant que liants pour du liège.

28. Liants aqueux, exempts de formaldéhyde pour des substrats ayant une large répartition ,de poids moléculaire, contenant des polymères, constitués de monomères A) et B) avec :
(A) 5 à 50 % en poids d'un anhydride d'acide éthyléniquement insaturé ou d'un acide dicarboxylique éthyléniquement insaturé, dont les groupes acide carboxylique peuvent former un groupe anhydride, ou des mélanges de ceux-ci [monomères A)],
(B) 50 à 95 % en poids d'un composé éthyléniquement insaturé [monomères B)] différent de A), ainsi que
(C) au moins un réticulant polyfonctionnel ou des mélanges de ceux-ci,
les polymères obtenus par polymérisation par voie radicalaire à partir de A) et B) se situant dans la surface se trouvant au-dessus d'une droite, dans le cas d'un classement dans un système de coordonnées selon leur poids moléculaire moyen Mw et leurs valeurs de polydispersion, qui est définie par l'équation de droite y = 1,25x + 20 000 et a été déplacée d'au moins + 3000 parallèlement dans la direction y, l'axe des x désignant la moyenne pondérée du poids moléculaire et l'axe des y désignant la polydispersion fois 10 000.
